# EUROPÄISCHE PATENTANMELDUNG

(11) **EP 4 796 503 A1**
(43) Veröffentlichungstag der Anmeldung: **26.08.2026**
(21) Anmeldenummer: 25159456.0
(22) Anmeldetag: 21.02.2025
(51) Int. Cl.: C02F 1/461, B08B 3/10, C25F 1/00, F26B 5/06, B29B 17/00, C02F 103/08, C02F 103/20, C02F 101/16

(54) **ELEKTRISCH GESTEUERTE REINIGUNG VON SALZHALTIGEN FLÜSSIGKEITEN ODER SALZBEHAFTETEN GEGENSTÄNDEN MIT WÄSSRIGEN REINIGUNGSMITTELN**

(71) Anmelder: HM Realization GbR, 83623 Dietramszell (DE)
(72) Erfinder: Hilbig, Martin, 72762 Reutlingen (DE); Müller, Marco, 83623 Dietramszell (DE)
(74) Vertreter: Beckord & Niedlich Patentanwälte PartG mbB

(57) **Zusammenfassung**

Die Erfindung betrifft ein Verfahren zur Reinigung einer salzhaltigen Flüssigkeit und/oder von salzbehafteten Gegenständen (7). Bei dem Verfahren wird mindestens ein salzbehafteter Gegenstand (7), insbesondere Plastikmüll, und/oder eine salzhaltige Flüssigkeit in einem Behälter (2) gesammelt. Es wird ein wässriges Reinigungsmittel (6) in den Behälter (1) zugegeben. Weiterhin wird der mindestens eine salzbehaftete Gegenstand (7) und/oder die salzhaltige Flüssigkeit mit dem wässrigen Reinigungsmittel von dem Salz (c) durch Kontaktieren des wässrigen Reinigungsmittels mit mindestens zwei Elektroden (AN, K) mit zueinander unterschiedlichen elektrischen Potentialen befreiet, wobei durch den Kontakt des wässrigen Reinigungsmittels (6) mit dem Salz (c) des salzbehafteten Gegenstands (7) und/oder der salzhaltigen Flüssigkeit und den mindestens zwei Elektroden (AN, K) ein galvanischer Prozess zwischen dem Salz (c) und dem wässrigen Reinigungsmittel (6) ausgelöst wird und das Salz (c) und das wässrige Reinigungsmittel (6) in Reaktionsprodukte (RP) umgesetzt werden. Es wird auch eine Reinigungsvorrichtung (10) beschrieben. Weiterhin wird eine Trocknungsmethode von Plastikmüll beschrieben und eine Einstufungsmethode in die Abfallhierarchie bezogen auf die Umwandlung von Primärstoffe in Sekundärstoffe im Bereich Plastikmüll.

## Beschreibung

Die Erfindung betrifft ein Verfahren zur elektrisch gesteuerten Reinigung einer salzhaltigen Flüssigkeit und/oder eines salzbehafteten Gegenstands mit einem wässrigen Reinigungsmittel. Weiterhin betrifft die Erfindung eine Reinigungsvorrichtung und eine Trocknungsmethode im Bereich des Kunststoffrecyclings sowie deren Platzierung in einer Prozesskette zu Land, auf einem Strandfahrzeug oder an Bord eines Wasserfahrzeugs. Außerdem veranschaulicht die Erfindung eine Möglichkeit der Kennzeichnung des gereinigten Materials zur Marktüberwachung für eine Einstufung als Verfahren im Einklang mit der Abfallhierarchie und dem Notifizierungsverfahren für grenzüberschreitende Abfallerbringungen.

Eine galvanische Zelle, auch als galvanisches Element oder galvanische Kette bezeichnet, ist eine Vorrichtung zur spontanen Umwandlung von chemischer in elektrische Energie oder umgekehrt. Jede Kombination von mindestens zwei hinsichtlich ihres Materials unterschiedlichen Elektroden und einem Elektrolyten als Ladungstransportmittel kann als eine solche galvanische Zelle betrachtet werden und als Gleichspannungsquelle genutzt werden. In Abhängigkeit von der Konzentration des Elektrolyten und den Materialien der Elektroden einer galvanischen Zelle kann die galvanische Zelle eine eingeprägte Spannung umfassen, mit der einer Last ein Gleichstrom geliefert wird. Bei geringer Kapazität der galvanischen Zelle kann die an der Last abfallende elektrische Spannung allerdings dadurch, dass sich der Innenwiderstand der galvanischen Zelle ändert, auch zeitlich stärker variieren.

Eine typische Anwendung einer galvanischen Zelle ist die Speicherung von elektrischer Energie, wobei mittels eines elektrischen Stroms ein Ladevorgang erfolgt und elektrische Energie in chemische Energie umgewandelt wird. In einem Entladevorgang kann dann die in der galvanischen Zelle gespeicherte chemische Energie wieder in elektrische Energie umgewandelt werden und als elektrischer Strom für einen elektrischen Prozess zur Verfügung gestellt werden.

Durch eine Invertierung der angelegten elektrischen Spannung, was auch als negatives Laden oder Entladen bezeichnet wird, können Prozesse, die beim Laden einer galvanischen Zelle erfolgen, auch umgekehrt werden. Meist erfolgt durch diese Umpolung eine chemische Zersetzung, weshalb man auch bei der angelegten inversen elektrischen Spannung von einer Zersetzungsspannung spricht.

Als Elektrolyt, welcher für den Aufbau einer galvanischen Zelle benötigt wird, wird eine Flüssigkeit oder in seltenen Fällen auch ein Feststoff verstanden, die bzw. der bewegliche Ionen umfasst, die dazu in der Lage sind, einen Ladungstransport zwischen den Elektroden vorzunehmen. An den Grenzflächen zwischen den Elektroden und dem Elektrolyten treten elektrochemische Reaktionen auf, insbesondere dann, wenn ein elektrischer Strom zwischen den Elektroden fließt.

In der Tierhaltung fallen große Mengen von ammoniakhaltigen organischen Flüssigkeiten oder derartige Flüssigkeiten umfassende Gemische an, die in der Regel als Gülle oder Jauche bezeichnet werden. Üblicherweise nutzen Landwirte diese Produkte zur Düngung von Wiesen und Feldern. Allerdings unterliegt diese Düngung gewissen Beschränkungen, um den Eintrag von umweltschädlichem Nitrat ins Grundwasser zu begrenzen. Die Massentierhaltung produziert jährlich über 200 Millionen Kubikmeter Gülle. Für deren Entsorgung reichen die Flächen der landwirtschaftlichen Betriebe nicht aus. Weiterhin wird bei dem Austrag ammoniakhaltiger Flüssigkeiten, wie zum Beispiel Gülle, meist Ammoniak in die Atmosphäre freigesetzt, welches sich in der Luft mit anderen Stoffen verbindet und die Atmosphäre als Feinstaub kontaminiert. Außerdem kommt es durch die industrielle Landwirtschaft zu einer Überdüngung der Meere infolge des Stickstoffeintrags und damit zur vermehrten Algenbildung.

Herkömmlich werden Verfahren zur Umwandlung von Gülle in Feststoffe angewandt. Die Feststoffe werden als Düngergranulat verwendet. Allerdings wird für derartige Umwandlungsprozesse sehr viel Primärenergie insbesondere für Prozesswärme benötigt. Meist dient als Primärenergie Öl oder Gas, was mit hohen Kosten und Umweltbelastungen unter anderem auch im Zusammenhang mit einem möglichen Treibhauseffekt in der Atmosphäre verbunden ist.

Alternativ kann Gülle auch zum Erzeugen von Biogas genutzt werden. Dafür muss die Gülle allerdings zunächst erwärmt werden und auf erhöhter Temperatur gehalten werden. Um Wasserstoff zur Erzeugung der Kohlenwasserstoffe bereitzustellen, muss sehr viel elektrische Energie bereitgestellt werden, mit der der Wasserstoff elektrolytisch erzeugt wird.

Grundsätzlich weisen derartige auf organischen Exkrementen basierende Flüssigkeiten eine Vielzahl von darin gelösten Ionen auf und sie eignen sich daher als Elektrolyte für die vorstehend beschriebenen galvanischen Zellen.

Ein weiteres Umweltproblem ist in der Entsorgung von Müll, insbesondere Plastikmüll, zu sehen, welcher besonders ausgeprägt in Schwellenländern und Entwicklungsländern meist frei in die Umwelt gelangt und von dort über Flüsse in die Meere transportiert wird. Jährlich gelangen ca. 5-10 Mio. Tonnen Plastik in die Ozeane. In den Meeren zersetzt sich das Plastik langsam und gelangt über die Meerestiere in die Nahrungskette. Bisher ist noch nicht geklärt, ob oder in wieweit Mikroplastik Tieren oder Menschen gefährlich werden kann. Außerdem werden auch viele Meerestiere aufgrund der Aufnahme von größeren Teilen Plastik anstatt von Nahrung, oder indem sie sich an dem Plastik verletzen oder damit strangulieren, gesundheitlich beeinträchtigt oder gar getötet. Soll der Plastikmüll recycelt werden, so muss er zunächst aus dem Meer gesammelt werden und anschließend, von an ihm anhaftenden Schmutz, insbesondere Meersalz, gereinigt werden. Herkömmlich wird hierfür viel Süßwasser benötigt, welches insbesondere in wasserarmen Entwicklungsländern nur schwer verfügbar und kostenintensiv zu beschaffen ist. Die Reinigung ist unerlässlich, wenn das Plastikmaterial anschießend recycelt werden soll, beispielsweise entweder zu Mineralöl oder erneut zu Plastik weiterverarbeitet werden soll. Wird jedoch Salzwasser zur Reinigung des Mülls verwendet, so bleibt nach dem Trocknen des Mülls anschließend Salz in Form von Kristallen auf dem Müll zurück, was eine Verunreinigung bedeutet und eine Weiterverarbeitung erschwert.

Es ist daher eine Aufgabe der vorliegenden Erfindung, ein ressourcensparendes und umweltschonendes Verfahren zur Verwertung und/oder Reinigung mindestens einer der vorstehend erwähnten Reststoffe anzugeben. Ebenfalls ist es eine Aufgabe der vorliegenden Erfindung, eine entsprechende Vorrichtung zur Verwertung und/oder Reinigung der genannten Reststoffe zu entwickeln.

Insbesondere sollen mit den genannten Verfahren und Vorrichtungen in der Tierhaltung anfallende ammoniakhaltige organische Flüssigkeiten oder derartige Flüssigkeiten umfassende Gemische prozessierbar sein. Weiterhin ist es eine spezifische Aufgabe, die Beseitigung und Wiederverwertung von Reststoffen in Form von in Gewässern treibendem Plastikmüll zu erleichtern.

Diese Aufgaben werden durch ein Verfahren zur Reinigung einer salzhaltigen Flüssigkeit und/oder eines salzbehafteten Gegenstands gemäß Anspruch 1, eine Reinigungsvorrichtung gemäß Anspruch 11 und ein System mit einer Anlage zum Waschen und einer Anlage zum Trocknen gemäß Funktionsprinzip des Gefriertrocknens, platziert in einem Maschinenpark für den Einsatz im Recycling von Plastikmüll, gemäß Patentanspruch 15 gelöst.

Die dem erfindungsgemäßen Verfahren zugrundeliegende Idee kann darin gesehen werden, eine galvanische Zelle zur Steuerung eines chemischen Prozesses zur Reinigung oder Wandlung von Reststoffen, insbesondere salzhaltige wässrige Flüssigkeiten oder salzbehaftetem Plastikmüll oder ionenhaltigen Reststoffen, zu verwenden. Dabei werden die Reststoffe, da sie ja Ionen umfassen, mit einem wässrigen Lösungsmittel bzw. Reinigungsmittel vermischt und der flüssige Anteil des Gemischs als Elektrolyt für die galvanische Zelle genutzt. Durch einen gezielten Eintrag elektrischer Energie erfolgt anschließend eine Steuerung von chemischen Prozessen zwischen den Elektroden und dem Elektrolyten, wodurch eine Reinigung der Reststoffe, insbesondere durch eine chemische Umsetzung von umweltbelastenden Bestandteilen der Reststoffe in weniger umweltbelastende Reststoffe oder leichter aus den Reststoffen zu extrahierende Stoffe, erzielt wird. Hierbei wird die Erkenntnis genutzt, dass in Abhängigkeit von dem Elektrodenmaterial und von der Höhe der an den Elektroden angelegten elektrischen Spannung unterschiedliche Arten von Stoffkombinationen, insbesondere Salzen, auf Basis der Reststoffe oder auf Basis von an den Reststoffen anhaftenden Begleitstoffen, erzeugt werden können.

Bei dem Reaktionsvorgang kommt es zu einem Ausfällen von festen und/oder gasförmigen Produkten, die aufgrund ihres Aggregatszustands leicht aus der Flüssigkeit des Elektrolyten entfernbar sind.

Im Rahmen des erfindungsgemäßen Verfahrens zur Reinigung einer salzhaltigen Flüssigkeit und/oder eines salzbehafteten Gegenstands wird mindestens ein salzbehafteter Gegenstand, insbesondere Plastikmüll, und/oder eine salzhaltige Flüssigkeit in einem Behälter gesammelt. Zunächst wird der Ionen umfassende Reststoff, welcher vorzugsweise salzbehaftete Gegenstände, insbesondere Plastikmüll, umfasst, in einem Behälter gesammelt.

Insbesondere für den Fall, dass der Reststoff nur Feststoffe umfasst, wird weiterhin eine Flüssigkeit hinzugegeben, um zusammen mit dem Reststoff und insbesondere den in dem Reststoff enthaltenen Ionen einen Elektrolyten zu bilden. Hierzu eignet sich insbesondere eine Zugabe eines wässrigen Reinigungsmittels in den Behälter. Ein wässriges Reinigungsmittel hat die Eigenschaften aufgrund der Polarität von Wasser Schmutz zu lösen, weiterhin auch Schmutz abzutransportieren und zu verdünnen. Wie später noch ausführlich erläutert, umfasst ein solches wässriges Reinigungsmittel vorzugsweise eine ammoniakhaltige organische Flüssigkeit oder ein eine ammoniakhaltige organische Flüssigkeit aufweisendes Gemisch, das in dem Behälter gesammelt wird. Das wässrige Reinigungsmittel umfasst auch bevorzugt Salzwasser, insbesondere dann, wenn als weitere Komponente ausschließlich ein salzbehafteter Gegenstand, insbesondere Plastikmüll verwendet wird, um einen Elektrolyten zu bilden. Umfasst der Reststoff, bzw. die salzhaltige Flüssigkeit Salzwasser und das wässrige Reinigungsmittel ebenfalls Salzwasser, so kann das Verfahren auch zur Entsalzung von Salzwasser genutzt werden.

Weiterhin erfolgt ein Reinigungsprozess, wobei der mindestens eine salzbehaftete Gegenstand und/oder die salzhaltige Flüssigkeit mit dem wässrigen Reinigungsmittel von dem Salz durch Kontaktieren des wässrigen Reinigungsmittels mit mindestens zwei Elektroden mit zueinander unterschiedlichen elektrischen Potentialen befreit wird bzw. das darin enthaltene Salz reduziert und umgesetzt wird. Dabei wird durch den Kontakt des wässrigen Reinigungsmittels mit dem Salz des salzbehafteten Gegenstands und/oder der salzhaltigen Flüssigkeit und den mindestens zwei Elektroden ein galvanischer Prozess zwischen dem Salz und dem wässrigen Reinigungsmittel ausgelöst und das Salz und das wässrige Reinigungsmittel werden in Reaktionsprodukte umgesetzt.

Weiterhin erfolgt ein Kontaktieren des so gebildeten Elektrolyten mit mindestens zwei voneinander separaten Elektroden.

Weiterhin wird an die Elektroden ein elektrisches Potenzial mit einem in Abhängigkeit von der Art und der Menge der von dem Reststoff und/oder der salzhaltigen Flüssigkeit und/oder dem wässrigen Reinigungsmittel umfassten Ionen gewählten Wert angelegt.

Durch diesen Ansteuerungsvorgang wird ein galvanischer Prozess zwischen den Elektroden und den von dem Reststoff und/oder der salzhaltigen Flüssigkeit und/oder dem wässrigen Reinigungsmittel umfassten Ionen ausgelöst und es werden gezielt vorbestimmte Reaktionsprodukte dieses Prozesses erzeugt. Durch diesen Prozess erfolgt eine Reinigung oder Umwandlung des Reststoffs oder der salzhaltigen Flüssigkeit, so dass eine Weiterverwendung und Weiterverarbeitung des so prozessierten Reststoffs bzw. der entsalzten Flüssigkeit erleichtert wird. Dieses Ziel wird dadurch erreicht, dass die Werte der Elektrodenpotentiale so gewählt werden, dass sich die chemische Zusammensetzung des Reststoffs oder der salzhaltigen Flüssigkeit oder des wässrigen Reinigungsmittels durch einen galvanischen Prozess in einer vorbestimmten Art und Weise ändert.

Vorteilhaft wird eine Prozessierung des Reststoffs und/oder des wässrigen Reinigungsmittels, sei es salzbehafteter Plastikmüll, Salzwasser oder eine ammoniakhaltige Flüssigkeit, durch einen galvanischen Prozess erreicht, wodurch dieser Müll bzw. Reststoff bzw. diese zu reinigende Substanz in einen leichter weiterverwendbaren Zustand verwandelt wird.

Die erfindungsgemäße Reinigungsvorrichtung weist einen Behälter zum Sammeln einer salzhaltigen Flüssigkeit und/oder mindestens eines salzbehafteten Gegenstands, insbesondere Plastikmüll, zur Aufnahme eines wässrigen Reinigungsmittels, also insbesondere zur Aufnahme eines zu reinigenden, Ionen umfassenden wässrigen Reststoffs auf.

Der Behälter ist dazu ausgebildet, insbesondere für den Fall, dass der Reststoff nur Feststoffe umfasst, ein wässriges Reinigungsmittel, also eine Flüssigkeit aufzunehmen, damit die Flüssigkeit zusammen mit dem Reststoff und insbesondere den in dem Reststoff enthaltenen Ionen einen Elektrolyten zu bildet.

Die erfindungsgemäße Reinigungsvorrichtung weist weiterhin mindestens zwei Elektroden auf, welche dazu eingerichtet sind, den so gebildeten Elektrolyten zu kontaktieren.

Hierfür weisen die mindestens zwei Elektroden zwei zueinander unterschiedliche elektrische Potenziale auf. Die unterschiedlichen Werte der Potenziale werden zum Reinigen der salzhaltigen Flüssigkeit und/oder des mindestens einen salzbehafteten Gegenstands mit dem wässrigen Reinigungsmittel von dem Salz des salzbehafteten Gegenstands und/oder der salzhaltigen Flüssigkeit durch Kontaktieren des wässrigen Reinigungsmittels mit den mindestens zwei Elektroden genutzt. Der Prozess läuft derart ab, dass durch den Kontakt des wässrigen Reinigungsmittels mit dem Salz und den mindestens zwei Elektroden ein galvanischer Prozess zwischen dem Salz und dem wässrigen Reinigungsmittel ausgelöst wird und das Salz und das wässrige Reinigungsmittel in Reaktionsprodukte umgesetzt werden.

Die erfindungsgemäße Reinigungsvorrichtung weist vorzugsweise eine Ansteuerungseinheit auf zum Ansteuern der Elektroden, derart, dass ein elektrisches Potenzial mit einem in Abhängigkeit von der Art und der Menge der von dem Reststoff oder der salzhaltigen Flüssigkeit oder dem wässrigen Reinigungsmittel umfassten Ionen gewählten Wert angelegt wird.

Durch diesen Ansteuerungsvorgang wird ein galvanischer Prozess zwischen den Elektroden und den von dem Reststoff oder der salzhaltigen Flüssigkeit oder dem wässrigen Reinigungsmittel umfassten Ionen ausgelöst und es werden gezielt vorbestimmte Reaktionsprodukte dieses Prozesses erzeugt. Durch diesen Prozess erfolgt eine Reinigung oder Umwandlung des Reststoffs bzw. der salzhaltigen Flüssigkeit oder des wässrigen Reinigungsmittels, so dass eine Weiterverwendung und Weiterverarbeitung der so prozessierten Stoffe erleichtert wird. Dieses Ziel wird dadurch erreicht, dass die Werte der Elektrodenpotentiale so gewählt werden, dass sich die chemische Zusammensetzung des Reststoffs und/oder der salzhaltigen Flüssigkeit und/oder des wässrigen Reinigungsmittels durch einen galvanischen Prozess in einer vorbestimmten Art und Weise ändert.

Optional weist die Reinigungsvorrichtung eine Entnahmeeinheit zum Entnehmen des so prozessierten Reststoffs aus dem Behälter heraus auf.

Die erfindungsgemäße Reinigungsvorrichtung teilt die Vorteile des erfindungsgemäßen Verfahrens zur Reinigung einer salzhaltigen Flüssigkeit und/oder von salzbehafteten Gegenständen, also insbesondere eines Ionen umfassenden Reststoffs.

Die Ansteuerung, der erfindungsgemäßen Reinigungsvorrichtung kann zum überwiegenden Teil in Form von Softwarekomponenten in einem Prozessor eines Rechensystems zur Steuerung der Reinigungsvorrichtung ausgebildet sein. Dieses Rechensystem ist vorzugsweise Teil einer Steuereinrichtung oder Ansteuerungseinheit, um den Reinigungsschritt des erfindungsgemäßen Verfahrens auszuführen. Die Ermittlung geeigneter Werte der Potentiale der Elektroden kann auf Basis von gespeicherten Tabellen eines Datenspeichers erfolgen, welche die Bildung von spezifischen lonenverbindungen, insbesondere Salzen, mit Elektrodenpotentialen in Beziehung setzt. Die gespeicherten Tabellen ermöglichen ebenfalls eine KI ("KI" ist eine Abkürzung für "künstliche Intelligenz") gestützte Analyse der Kausalität und mögliche Beurteilung der Korrelation zwischen verschiedenen Versuchsreihen und Ausgangsstoffen.

Eine teilweise softwaremäßige Realisierung hat den Vorteil, dass auch schon bisher bei der Steuerung von Prozessen genutzte Rechnersysteme und Netzwerke auf einfache Weise, durch ein Software-Update nachgerüstet werden können, um in Kombination mit einer erfindungsgemäßen Reinigungsvorrichtung auf die erfindungsgemäße Weise zu arbeiten. Insofern wird die Aufgabe, auch durch ein entsprechendes Computerprogrammprodukt mit einem Computerprogramm gelöst, welches direkt in eine Speichereinrichtung eines solchen Rechnersystems ladbar ist, mit Programmabschnitten, um Steuerungsschritte zur Durchführung des erfindungsgemäßen Verfahrens zur Reinigung einer salzhaltigen Flüssigkeit und/oder eines salzbehafteten Gegenstands auszuführen, wenn das Computerprogramm in dem Rechnersystem ausgeführt wird.

Das erfindungsgemäße System weist eine Anlage zum Waschen auf, welche eine erfindungsgemäße Reinigungsvorrichtung umfasst. Außerdem weist das erfindungsgemäße System eine Anlage zum Trocknen gemäß Funktionsprinzips des Gefriertrocknens auf, welche platziert sind auf einem Maschinenpark für den Einsatz im Recycling von Plastikmüll.

In dem erfindungsgemäßen System kommen die bereits im Zusammenhang mit der erfindungsgemäßen Reinigungsvorrichtung genannten Vorteile zum Tragen.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen und Beschreibungsteilen einer anderen Kategorie weitergebildet sein können und Merkmale verschiedener Ausführungsbeispiele zu neuen Ausführungsbeispielen kombiniert werden können.

In einer praktikablen Ausgestaltung des erfindungsgemäßen Verfahrens zur elektrisch gesteuerten Reinigung einer salzhaltigen Flüssigkeit und/oder eines salzbehafteten Gegenstands umfasst der Reinigungsschritt die folgenden Teilschritte:
- Entnehmen des mindestens einen gereinigten Gegenstands aus dem Behälter,
- Entfernen der bei dem galvanischen Prozess entstandenen gasförmigen und festen Reaktionsprodukte aus dem Behälter,
- Entfernen und Filtern des zumindest teilweise umgesetzten wässrigen Reinigungsmittels aus dem Behälter.

Vorteilhaft können die Produkte des Verfahrens nach dem Prozess entnommen und weiterverarbeitet oder weiterverwendet werden, das gilt insbesondere für den mindestens einen gereinigten Gegenstand, die gasförmigen oder festen Reaktionsprodukte und Bestandteile des wässrigen Reinigungsmittels.

In einer bevorzugten Ausgestaltung, des erfindungsgemäßen Verfahrens zur elektrisch gesteuerten Reinigung einer salzhaltigen Flüssigkeit und/oder eines salzbehafteten Gegenstands umfasst das wässrige Reinigungsmittel vorzugsweise eine ammoniakhaltige organische Flüssigkeit oder ein eine ammoniakhaltige organische Flüssigkeit umfassendes Gemisch. Wie bereits eingangs erläutert, ist es besonders vorteilhaft, wenn Ammoniak von organischen Flüssigkeiten separiert werden kann und dessen unkontrollierte Abgabe an die Umwelt vermieden wird. Ammoniak kann als Grundbestandteil von Düngemitteln oder als Grundchemikalie, beispielsweise für Harnstoff, Harnstoffharze, Ammoniumsalze, Salpetersäure, Sprengstoffe, Blausäure, Hydrazin, Amine, Amide, usw. weiterverarbeitet werden.

Um das wässrige Reinigungsmittel auf den festen Reststoff wirken zu lassen, aber den Reststoff leicht von dem wässrigen Reinigungsmittel zu trennen, wird das wässrige Reinigungsmittel in den Behälter gegeben. Der Reststoff jedoch wird in einen für das wässrige Reinigungsmittel durchlässigen Korb eingefüllt, der in den Behälter hineingehängt oder hineingestellt wird. Dabei wird der Korb derart positioniert, dass die Reststoffe, vorzugsweise salzbehaftete Gegenstände, in das wässrige Reinigungsmittel bzw. die wässrige Reinigungsflüssigkeit und/oder in die salzhaltige Flüssigkeit getaucht werden.

Enthält die wässrige Reinigungsflüssigkeit Ammonium-Ionen, so wird sowohl ein Reinigungseffekt für salzbehaftete Gegenstände erreicht, d.h. das an den Gegenständen anhaftende Salz wird von ihnen abgewaschen, als auch gewisse Umsetzprozesse bei der chemischen Reaktion zwischen den Salzen und dem Ammoniak ausgelöst. Die bei dieser Reaktion auftretenden als Feststoff oder als Gas vorliegenden Produkte lassen sich leicht von der Flüssigkeit trennen. Dabei kann die Art und Zusammensetzung der Reaktionsprodukte durch die Werte der an die jeweiligen Elektroden angelegten Potentiale vorteilhaft beeinflusst werden.

Typische leicht separierbare Produkte sind Ammoniumsalze, wie zum Beispiel Ammoniumchlorid, Ammoniumnitrat, oder auch weitere Nitrate, wie zum Beispiel Kaliumnitrat, Natriumnitrat, Magnesiumnitrat, oder auch Phosphate, wie Kaliumphosphat, Magnesiumphosphat oder Natriumphosphat, welche durch die Reaktion nitrat- und phosphathaltiger Gülle mit Meersalz anfallen können.

Daher werden bei dem erfindungsgemäßen Verfahren, vorzugsweise zunächst direkt auf dem Meer salzbehaftete Gegenstände, insbesondere Plastikmüll, gesammelt und anschließend entweder direkt auf dem Meer oder an Land mit einer ammoniakhaltigen organischen Flüssigkeit oder einem eine ammoniakhaltige organische Flüssigkeit umfassenden Gemisch gereinigt. Der Reinigungsvorgang erfolgt vorzugsweise durch ein Eintauchen der Gegenstände in einem Tauchbecken als Behälter, welches mit der ammoniakhaltigen organischen Flüssigkeit, oder dem eine ammoniakhaltige organische Flüssigkeit umfassenden Gemisch gefüllt ist. Der Waschvorgang wird lange genug fortgesetzt, dass eine chemische Reaktion, induziert durch an den Elektroden anliegende geeignete Potenziale, zwischen der als Reinigungsmittel eingesetzten ammoniakhaltigen organischen Flüssigkeit oder dem eine ammoniakhaltige organische Flüssigkeit umfassenden Gemisch und den auf den Gegenständen anhaftenden Salzen stattfinden kann.

Bei dem Reaktionsvorgang kommt es zu einem Ausfällen von festen und gasförmigen Produkten, die aufgrund ihres Aggregatszustands, leicht aus der Flüssigkeit entfernbar sind.

Die von Ammoniak und den genannten festen und gasförmigen Produkten befreite Flüssigkeit kann anschließend, beispielsweise in der Landwirtschaft als Dünger, weiterverwendet werden, ohne dass die in der Einleitung genannten negativen Umweltfolgen zu befürchten sind. Die gereinigten Gegenstände, werden nach der Reinigung getrocknet und lassen sich anschließend einem Recyclingprozess zuführen.

Als salzhaltige Flüssigkeit kann, wie bereits erwähnt, Salzwasser genutzt werden, das mit der ammoniakhaltigen organischen Flüssigkeit gemischt wird.

Vorteilhaft werden so Synergieeffekte erreicht, indem zwei völlig unterschiedliche Edukte, nämlich Salzwasser bzw. der mit Salz behaftete Gegenstand und die ammoniakhaltige organische Flüssigkeit, in einem Reinigungsprozess zusammengebracht werden, wobei die jeweils bei dem Reinigungsprozess zu eliminierenden Edukte, jeweils als Reinigungsmittel für die Entfernung bzw. Neutralisierung des jeweils anderen Edukts genutzt werden. Anschaulich ausgedrückt, reagiert der in der Reinigungsflüssigkeit enthaltene Schadstoff, mit dem die Gegenstände behaftenden Salz und umgekehrt das Salz mit dem Schadstoff, so dass beide zu entsorgenden Stoffe auch selbst an dem Entsorgungsvorgang des jeweiligen Reaktionspartners beteiligt werden. Vorteilhaft trägt das Verfahren bei dieser bevorzugten Variante zur Lösung von zwei Entsorgungsproblemen bei, welche zunächst keinerlei Zusammenhang miteinander erkennen lassen, nämlich die Reinigung von salzbehafteten Gegenständen, insbesondere Plastikmüll im Meer, und die Entsorgung von ammoniakhaltigen organischen Flüssigkeiten, insbesondere Gülle. Vorteilhaft wird bei dem Reinigungsprozess außerdem der Verbrauch von Süßwasser reduziert, da als Ersatz dafür flüssige Abfallstoffe aus der Landwirtschaft genutzt werden. Im Gegenteil, kann die so gereinigte Flüssigkeit als Flüssigdünger, sowohl zur Düngung als auch zur Bewässerung in den Produktionskreislauf der Landwirtschaft zurückgeführt werden, ohne dass dafür ein erhöhter Energieaufwand getrieben werden müsste.

Die gereinigten Gegenstände, werden nach dem Reinigungsprozess aus dem Behälter entnommen, weiterhin werden die bei dem galvanischen Prozess entstandenen Reaktionsprodukte aus dem Behälter entnommen und es wird das zumindest teilweise umgesetzte wässrige Reinigungsmittel aus dem Behälter entfernt.

In einer ebenfalls bevorzugten Variante des erfindungsgemäßen Verfahrens umfasst das Salz, welches an den salzbehafteten Gegenständen haftet, Natriumchlorid und weist das wässrige Reinigungsmittel in Wasser gelöste Ammonium-Ionen auf. Insbesondere die Chlorid-Ionen können durch das Anlegen geeigneter Potenziale an die Elektroden in leicht abscheidbare Chloridsalze umgewandelt werden.

Bevorzugt umfasst das wässrige Reinigungsmittel mindestens eine der folgenden Verbindungen:
- Diphosphorpentoxid,
- Magnesiumoxid,
- Stickstoff.

Die genannten Edukte können, zur Umsetzung des an den Reststoffen anhaftenden Salzes, insbesondere Natriumchlorid verwendet werden.

Zum Auslösen der gewünschten chemischen Reaktionen zwischen dem salzbehafteten Gegenstand und dem wässrigen Reinigungsmittel umfassen die mindestens zwei Elektroden eine erste Elektrode und eine zweite Elektrode, wobei die erste Elektrode vorzugsweise Eisen als Elektrodenmaterial umfasst und die zweite Elektrode vorzugsweise Zink als Elektrodenmaterial umfasst. Zink weist als unedleres Metall ein deutlich niedrigeres Standardpotenzial als Eisen auf und eignet sich daher als Kathodenmaterial, während Eisen hier vorzugsweise als Anodenmaterial genutzt wird. In Abhängigkeit von den Werten und Vorzeichen der Potenziale der ersten Elektrode und der zweiten Elektrode tritt ein Energiefluss auf, welcher einen Ladevorgang oder Entladevorgang umfasst. Mithin läuft jeweils ein bestimmter Typ einer chemischen Reaktion mit dem jeweiligen Elektrodenmaterial der ersten Elektrode und der zweiten Elektrode ab. Dabei legt die Stärke des Energieflusses die Geschwindigkeit des Reinigungsvorgangs fest.

In einer Variante des erfindungsgemäßen Verfahrens wird über eine in den Korb hineinführende Leitung Kohlendioxid für den Reinigungsvorgang zugeführt. Über die Menge des Kohlendioxids kann der PH-Wert des erzeugten Elektrolyten und damit ebenfalls der Reaktionsverlauf des Reinigungsprozesses beeinflusst werden.

Um eine Durchmischung der Edukte der chemischen Reaktion zu erreichen, wird vorzugsweise das wässrige Reinigungsmittel während des Reinigungsvorgangs durch eine Rühreinrichtung in Bewegung versetzt und gehalten. Vorteilhaft wird eine verbesserte Durchmischung der an den Reaktionsprozessen beteiligen Komponenten erreicht.

Umfassen die Reaktionsprodukte gasförmige Anteile, so werden die gasförmigen Anteile vorzugsweise über eine an der Oberseite des Behälters angeordnete Abluftleitung abgeführt. Vorteilhaft können die gasförmigen Reaktionsprodukte entnommen werden und weiterverarbeitet werden.

Wie bereits ausführlich erläutert, werden in einer besonders effektiven Anwendung des erfindungsgemäßen Verfahrens die salzbehafteten Gegenstände an oder in einem salzhaltigen Gewässer, vorzugsweise einem Meer, gesammelt und wird der Reinigungsprozess vor Ort durchgeführt, so dass keine zusätzliche Energie für den Transport der an dem Reinigungsprozess beteiligten Materialien benötigt wird.

Als wässriges Reinigungsmittel werden dabei bevorzugt mit Wasser gemischte Exkremente, vorzugsweise Gülle, verwendet. Vorteilhaft können anfallende Exkremente in weiterverarbeitbare Produkte umgesetzt werden.

Vorzugsweise ist die erfindungsgemäße Reinigungsvorrichtung derart aufgebaut, dass der Behälter einen für das wässrige Reinigungsmittel durchlässigen Korb zur Aufnahme des mindestens einen salzbehafteten Gegenstands umfasst, welcher derart positionierbar ist, dass der mindestens eine salzbehaftete Gegenstand in das wässrige Reinigungsmittel getaucht wird. Vorteilhaft können zu reinigende Gegenstände leicht in den Behälter eingebracht und aus ihm entnommen werden.

In einer bevorzugten Ausgestaltung der erfindungsgemäßen Reinigungsvorrichtung umfassen die mindestens zwei Elektroden eine erste Elektrode und eine zweite Elektrode und umfasst die erste Elektrode vorzugsweise Eisen als Elektrodenmaterial und die zweite Elektrode vorzugsweise Zink als Elektrodenmaterial. Dabei sind die Elektroden vorzugsweise derart ansteuerbar, dass in Abhängigkeit von den Werten und Vorzeichen der Potenziale der ersten Elektrode und der zweiten Elektrode ein Energiefluss auftritt, welcher einen Ladevorgang oder Entladevorgang umfasst, und jeweils ein bestimmter Typ einer chemischen Reaktion mit dem jeweiligen Elektrodenmaterial der ersten Elektrode und der zweiten Elektrode abläuft.

Bevorzugt umfasst die Reinigungsvorrichtung eine galvanische Zelle, welche neben der ersten und der zweiten Elektrode eine dritte Elektrode umfasst. Die dritte Elektrode weist als Elektrodenmaterial vorzugsweise Chrom auf und ist dazu eingerichtet, ein Referenz-Potenzial, vorzugsweise ein Null-Potenzial, zur Messung des Potenzials der ersten Elektrode und des Potenzials der zweiten Elektrode bereitzustellen. Die dritte Elektrode vereinfacht als Referenz-Elektrode die Messung und Steuerung des Potenzials der ersten und zweiten Elektrode. Vorteilhaft können die Potenziale nach Pourbaix bzw. unter Hinzunahme eines zu den Elektrodenmaterialien passenden Pourbaix-Diagramms, d.h. insbesondere unter Berücksichtigung der Elektrodenmaterialien, so eingestellt werden, dass eine gewünschte chemische Reaktion zwischen ihnen abläuft.

Zur Steuerung der Reaktion weist die erfindungsgemäße Reinigungsvorrichtung eine Steuereinrichtung zum Messen und Einstellen der Potenziale der mindestens zwei Elektroden und zum Einstellen und/oder Regeln des Energieflusses zwischen den mindestens zwei Elektroden zum Steuern und Messen des Ablaufs und des Typs einer chemischen Reaktion mit dem jeweiligen Elektrodenmaterial der ersten Elektrode und der zweiten Elektrode auf.

Optional weist die erfindungsgemäße Reinigungsvorrichtung mindestens eine der folgenden Zusatzkomponenten auf:
- eine in den Korb hineinführende Leitung zum Zuführen von Kohlendioxid für den Reinigungsvorgang,
- eine Rühreinrichtung, vorzugsweise am Boden des Behälters, zum Bewegen des wässrigen Reinigungsmittels während eines Reinigungsvorgangs,
- eine an der Oberseite des Behälters angeordnete Abluftleitung.

Vorteilhaft kann der Umsetzungsprozess durch Rühren und Zugabe von Kohlendioxid gesteuert werden, wobei sich die Flüssigkeit selbst durchmischt, und durch den Prozessdruck mehr Gas aufnimmt. Je mehr Kohlendioxid in die Flüssigkeit eingetragen wird, um so mehr wird die Bildung von Schwefelwasserstoff gehemmt und damit die übelriechende Geruchsbildung unterbunden.

Die beim Reinigungsprozess entstandenen gasförmigen Produkte können nach oder während des Verfahrens über eine Abluftleitung abgeführt werden und stehen einer Weiterverwendung, beispielsweise durch das Membran-Trennverfahren, zur Verfügung.

In einer Ausgestaltung der erfindungsgemäßen Reinigungsvorrichtung weisen die mindestens zwei Elektroden auf:
- eine Mehrzahl von Elektrodenpaaren, deren Elektroden an der Innenseite des Behälters jeweils einander gegenüberliegend angeordnet sind, zum Messen von elektrischen Potenzialen, welche jeweils unterschiedlichen Elektrodenpaaren der Mehrzahl von Elektrodenpaaren zugeordnet sind,
- eine Auswerteeinheit, welche mit den Elektrodenpaaren elektrisch verbunden ist und dazu eingerichtet ist, auf Basis der gemessenen elektrischen Potenziale eine örtliche Verteilung von in dem Behälter auftretenden Säuren oder Basen zu ermitteln,
- eine Anzeigeeinheit zum bildlichen Darstellen der ermittelten Verteilung.

Vorteilhaft kann eine Verteilung der in dem Behälter vorhandenen Reaktionspartner ermittelt werden und es können auf Basis dieser Informationen Eingriffe in den Reinigungsvorgang vorgenommen werden. Beispielsweise können Säuren oder Basen entnommen werden, um entweder den Reinigungsprozess zu beeinflussen oder die genannten Komponenten gezielt abzuführen und weiterzuverarbeiten.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: eine schematisierte Darstellung einer Reinigungsvorrichtung gemäß einem Ausführungsbeispiel der Erfindung,
- Figur 2: ein Abbild der Beziehungen zwischen den chemischen Reaktionen der Elektroden im Vergleich zu den Sprüngen der Potentiale, wenn die Flussrichtung und die Spannungshöhe variiert,
- Figur 3: ein Pourbaix-Diagramm, welches den Zusammenhang zwischen unterschiedlichen Reaktionen an der Anode und der an der Anode anliegenden elektrischen Spannung bei der Anwendung der in Figur 1 gezeigten Reinigungsvorrichtung auf Salzwasser veranschaulicht,
- Figur 4: ein Pourbaix-Diagramm, welches den Zusammenhang zwischen unterschiedlichen Reaktionen an der Kathode und der an der Kathode anliegenden elektrischen Spannung bei der Anwendung der in Figur 1 gezeigten Reinigungsvorrichtung auf Salzwasser veranschaulicht,
- Figur 5: eine Darstellung der an den Elektroden anliegenden elektrischen Spannungswerte in Abhängigkeit von der Zeit,
- Figur 6: ein Diagramm, welches die Ansteuerungsvorgänge während eines Reinigungsprozesses in einer Reinigungsvorrichtung gemäß einem Ausführungsbeispiel der Erfindung veranschaulicht,
- Figur 7a,b,c: eine Darstellung einer Ansteuerungs- und Auswertungseinrichtung zur Ansteuerung und zum Auswerten von Messwerten der in der Reinigungsvorrichtung angeordneten Messeinheiten, insbesondere der Elektroden und Sensoren,
- Figur 8: eine Darstellung einer Reinigungsvorrichtung gemäß einem Ausführungsbeispiel der Erfindung mit Leitfähigkeitsmessung, PH-Wertmessung, CO2-Eintrag und Mischwerk und einer möglichen Erweiterung mit einer Kühlschlange und einem Heizelement für den Gefriertrocknungsprozess,
- Figur 9: eine Prozesskette und Reihenfolge von Maschinenabläufen die technisch notwendig sind, um salzhaltigen Müll in gereinigtes trockenes rieselfähiges Recyclat als Flakes oder als Granulat zu verarbeiten, damit es dem industriellen Wirtschaftskreislauf in der EU ("EU" steht für "Europäische Union") wieder zurückgeführt werden kann,
- Figur 10: eine Veranschaulichung eines Typenschilds zur Kennzeichnung des zurückgewonnenen Sekundärrohstoffs in Einklang mit der Abfallhierarchie und dessen Regelungen zur chemischen Analyse, dem Notifizierungsverfahren für die grenzüberschreitende Verbringen von Abfällen in einer Kreislaufwirtschaft der Europäischen Union, der Regelung für die Kennzeichnung von Kunststoffabfällen nach Typen, sowie bestehende Verfahren zur Homologation einer Marktüberwachung und Genehmigungsverfahren im nationalem Handel.

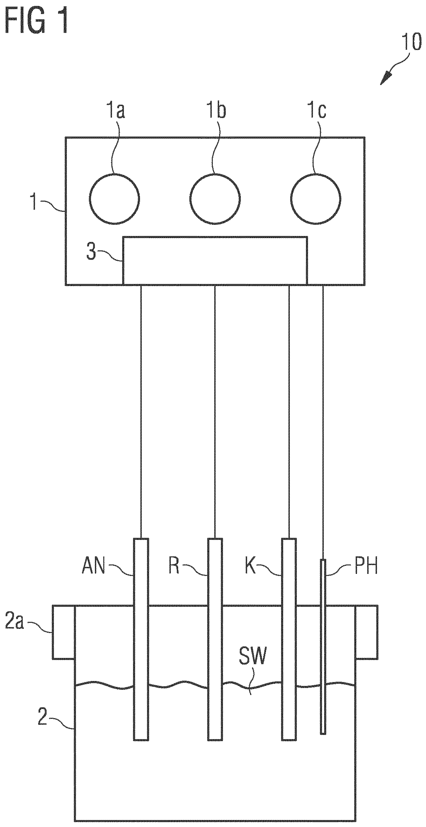

In Figur 1 ist eine schematisierte Darstellung einer Reinigungsvorrichtung 10 gemäß einem Ausführungsbeispiel der Erfindung gezeigt. Die Reinigungsvorrichtung 10 umfasst eine Steuereinrichtung 1 (im Bild oben dargestellt) und einen Behälter 2 (im Bild unten dargestellt) zum Sammeln von Salzwasser SW, von salzbehaftetem Plastikmüll 7 und von Gülle 6 als wässriges Reinigungsmittel. Die Steuereinrichtung 1 weist eine Spannungsmesseinheit 1a, eine Strommesseinheit 1b, eine Leitwert-messeinheit 1c sowie eine Ansteuerungseinheit 3 zum Anlegen eines definierten, jeweils unterschiedlichen Potenzials an drei Elektroden AN, R, K auf. Teil der Steuereinrichtung 1 ist auch ein PH-Sensor PH.

In dem Behälter 2 sind die drei Elektroden AN, R, K angeordnet, eine Anode AN, eine Referenzelektrode R und eine Kathode K. Die Referenzelektrode R (in der Mitte angeordnet) liefert ein Referenz-potenzial, vorzugsweise etwa 0 V, relativ zu dem die Potenziale der Anode AN (links angeordnet) und der Kathode K (rechts angeordnet) einstellbar sind. Die Anode AN ist in dem in FIG 1 gezeigten Ausführungsbeispiel aus Eisen gebildet und die Kathode K ist aus Zink ausgebildet. Die Referenzelektrode R weist Chromstahl als Material auf. Der Behälter 2 weist noch einen Deckel 2a auf zum Abdecken des in dem Behälter 2 aufbewahrten Gutes, insbesondere Salzwasser und/oder ein wässriges Reinigungsmittel.

In einem vereinfachten Prozess wird zunächst Salzwasser SW durch das Anlegen geeigneter elektrischer Spannungen an die Elektroden in einer Art galvanischen Prozess von Salz befreit.

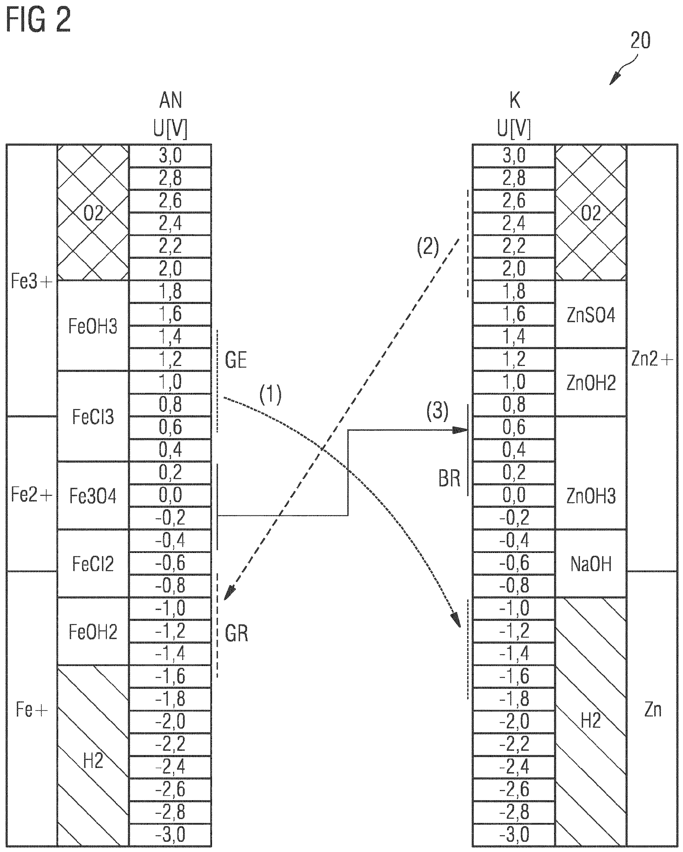

In Figur 2 wird in einem Balkendiagramm 20 dargestellt, wie der Prozess mit Schritt (1) beginnt, indem der Energiefluss von links nach rechts springt und dadurch die Reaktion GE ("GE" steht hier für die gelbe Farbe, die bei der Reaktion erzeugt wird) startet und später im Umkehrschluss mit Schritt (2) und der Reaktion GR ("GR" steht hier für die grüne Farbe, die bei der Reaktion erzeugt wird) endet. Hinter diesem Verhalten liegt der erfinderische Gedanke und der Zweck, das Salz aus seiner kristallinen oder wässrigen Form zu lösen, indem durch Energieeintrag die Bindungen in beide Richtungen aufgebrochen werden. Damit es aber anschließend zu einer Neutralisation kommt, braucht es noch einen Kurzschluss zwischen den Elektroden AN und K damit es zum Energiefluss in Schritt (3) kommt, wodurch sich in einer Reaktion BR ("BR" steht hier für die braune Farbe, die bei der Reaktion erzeugt wird) neue Elektronenbindungen bilden können und damit das Chlor sich teilweise als Gas verflüchtigt beziehungsweise das Natrium sein OH wieder abgibt und sich in den gelösten wässrigen Eisen-/Zinkverbindungen wieder Feststoff als Oxid absetzt.

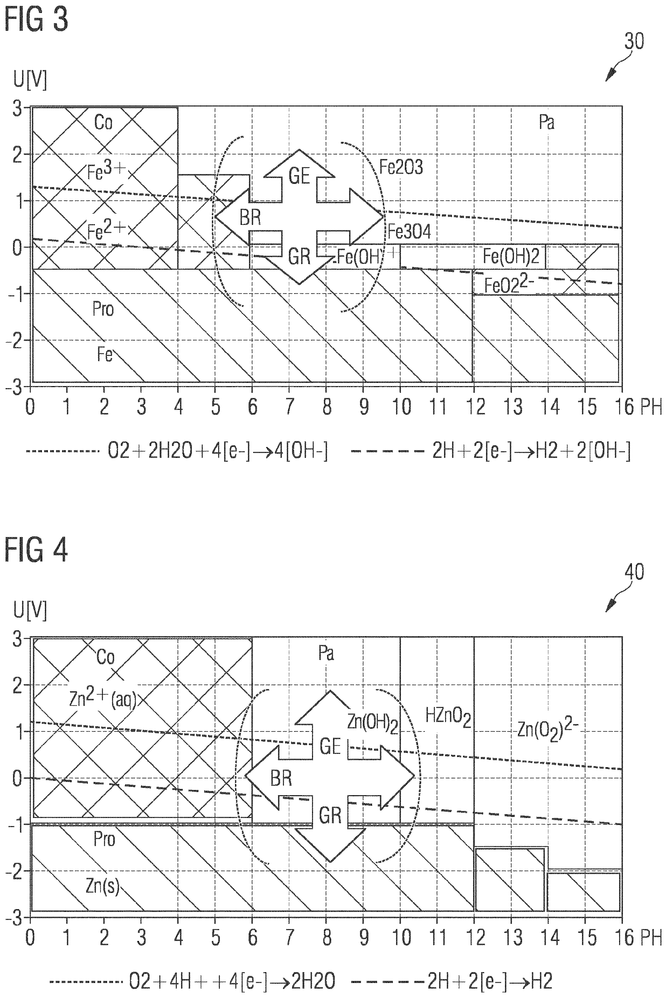

In Figur 3 ist ein Pourbaix-Diagramm 30 gezeigt, welches den Zusammenhang zwischen unterschiedlichen Reaktionen an der Anode AN und der an der Anode AN anliegenden elektrischen Spannung U bei der Anwendung der in Figur 1 gezeigten Reinigungsvorrichtung 10 auf Salzwasser SW in Abhängigkeit vom PH-Wert PH veranschaulicht. Oben links im Pourbaix-Diagramm 30, also für positive Spannungswerte U und für niedrige PH-Werte, ist ein Bereich veranschaulicht, der mit einer Korrosion Co (mit der Abkürzung Co des englischen Worts "Corrosion" markiert) der Anode AN verbunden ist. Hier gehen Eisenionen Fe²⁺, Fe³⁺ in Lösung. Weiter rechts im Pourbaix-Diagramm 30, also für höhere PH-Werte und für überwiegend positive Spannungswerte U, erfolgt eine Passivierung (mit der Abkürzung Pa für das englische Wort "passivation" symbolisiert) der Anode AN, wobei sich an der Anode AN eine Passivierungsschicht aus Fe₂O₃ oder Fe₃O₄ oder Fe(OH)⁺ oder Fe(OH)₂ bildet. Bei negativen elektrischen Spannungswerten U ist die Anode AN geschützt, was in Figur 3 mit der Abkürzung Pro für das englische Wort "Protection" symbolisiert wird. Ganz rechts im Diagramm 30 bei Werten der an der Anode AN anliegenden elektrischen Spannung um 0 V herum gibt es einen Bereich der Korrosion, wobei FeO₂²⁻ gebildet wird. Bei den üblicherweise bei dem Reinigungsvorgang genutzten PH-Werten zwischen 6 und 10 lassen sich unterschiedliche Verfärbungen an den Elektroden AN, K oder auch der Salzlösung selbst beobachten. Dabei ist eine gelbliche Verfärbung GE mit der Bildung von Eisenoxid Fe₂O₃ assoziiert. Eine grüne Verfärbung GR ist mit der Bildung von Hydroxiden verbunden und eine braune Verfärbung BR mit der Bildung von Fe₃O₄ verbunden. In Figur 3 sind auch zwei mit unterschiedlichem Linienmuster dargestellte Geraden eingezeichnet, welche den Umsatz von Sauerstoff und Wasserstoff zu OH⁻Ionen an der (Eisen)-Anode AN darstellen.

In Figur 4 ist ein Pourbaix-Diagramm 40 gezeigt, welches den Zusammenhang zwischen unterschiedlichen Reaktionen an der Kathode K und der an der Kathode K anliegenden elektrischen Spannung U bei der Anwendung der in Figur 1 gezeigten Reinigungsvorrichtung 10 auf Salzwasser SW veranschaulicht. Oben links in dem Pourbaix-Diagramm 40 ist ein Korrosionsbereich Co (mit der Abkürzung Co für das englische Wort "Corrosion" markiert) gezeigt, in dem Zn²⁺-Ionen in Lösung gehen. In der Mitte oben ist ein Bereich gezeigt, in dem eine Passivierung Pa (mit der Abkürzung Pa für das englische Wort "Passivation" markiert) erfolgt, wobei die Kathode K mit einer Zn²⁺(OH)₂-Schicht oder einer ZnO₂-Schicht bedeckt wird. Rechts oben in dem Pourbaix-Diagramm 40 ist wieder ein Korrosionsbereich dargestellt, wobei Zn(O₂)²⁻ Ionen in Lösung gehen. Bei größeren negativen elektrischen Spannungswerten U von mehr als -1 Volt ist die Kathode K meistens vor Korrosion geschützt, was in Figur 4 mit der Abkürzung Pro für das englische Wort "Protection" symbolisiert wird. In dem Diagramm 40 sind auch unterschiedliche Bereiche mit zusätzlicher gelber Verfärbung GE, grüner Verfärbung GR oder brauner Verfärbung BR der Kathode K dargestellt. Bei negativen elektrischen Spannungswerten kommt es eher zu einer Gelbverfärbung GE der Kathode, bei neutralen Werten der elektrischen Spannung zu einer Braunverfärbung BR und bei positiven elektrischen Spannungswerten kommt es zu einer Grünverfärbung GR. In Figur 4 sind auch zwei mit unterschiedlichem Linienmuster dargestellte Geraden eingezeichnet, welche den Umsatz von H⁺-Ionen zu Wasserstoff oder den Umsatz von Sauerstoff und H+-Ionen zu Wasser an der Kathode K darstellen.

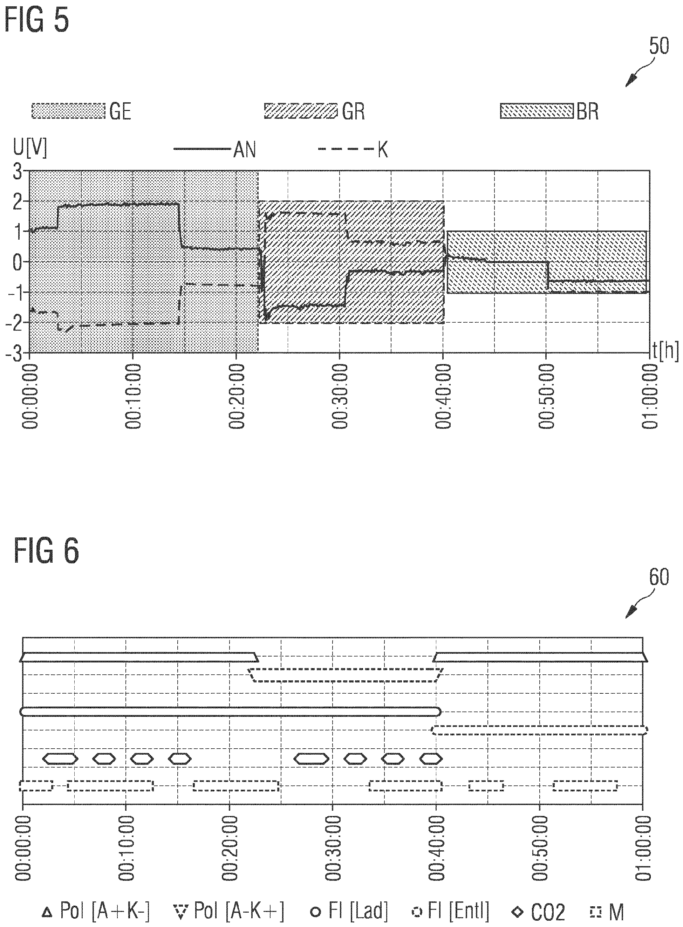

In Figur 5 ist eine Darstellung 50 der zwischen der Referenzelektrode R und den beiden anderen Elektroden AN, K jeweils anliegenden elektrischen Spannungswerte U (in Volt) in Abhängigkeit von der Zeit t (in Stunden: Minuten: Sekunden) veranschaulicht. Dabei sind unterschiedliche Phasen mit unterschiedlicher Färbung gezeigt, wobei eine Phase, in der die Salzlösung gelb gefärbt ist (Abschnitt links in Figur 5 gezeigt, mit "GE" abgekürzt), von einer Phase abgelöst wird, in der die Salzlösung grün gefärbt ist (Abschnitt in der Mitte in Figur 5 gezeigt) mit "GR" abgekürzt und schließlich noch eine Phase auftritt, in der die Salzlösung braun gefärbt ist (Abschnitt rechts in Figur 5 gezeigt, mit "BR" abgekürzt, die jeweiligen Abschnitte sind in Figur 5 durch jeweils unterschiedliche Grautöne bzw. unterschiedliche Schraffierungen dargestellt). Anhand der Pourbaix-Diagramme, welche in Figur 3 und Figur 4 dargestellt sind, lässt sich der Umsatz unterschiedlicher Ionen in dem Behälter erkennen. Weist zum Beispiel anfangs die Referenzelektrode R zur Anode AN eine positive Spannung von +1 V und zur Kathode eine negative Spannung von -1,5 Volt auf, so wird in der Salzlösung zunehmend FeCl₃ gebildet, welches zwischen Werten von 0,4 Volt und 1,0 Volt zwischen der Referenzelektrode R und der Eisen-Anode AN gebildet wird. Erreicht die Referenzelektrode R zur Anode AN eine negative Spannung von -0,4 Volt bis -0,8 Volt, was in der grünen Phase der Fall ist, so wird FeCl gebildet, was zu einer Grünfärbung der Salzlösung beiträgt. In Abhängigkeit von den Werten der gewählten Elektrodenspannungen können also unterschiedliche chemische Reaktionen gesteuert werden und insbesondere in dem Salzwasser gelöste Salze umgesetzt werden. Bei Werten gegenüber beiden Elektroden A, K nahe 0V kommt es zur Korrosion und Bildung von Fe₃O₄, ZnOH₃, welche zur braunen Verfärbung beitragen.

In Figur 6 ist ein Diagramm 60 gezeigt, welches die Ansteuerungsvorgänge während eines Reinigungsprozesses in einer Reinigungsvorrichtung gemäß einem Ausführungsbeispiel der Erfindung in Abhängigkeit von der Zeit t (In Stunden: Minuten: Sekunden dargestellt) veranschaulicht.

Das Graustufensymbol FI[Lad] in der oberen Zeile gibt die Zeitspanne an, in der ein Ladeprozess Lad erfolgt, also ein Ladestrom über den Vorwiderstand R_{V} fließt. Das Graustufensymbol FI[Entl] in der zweitobersten Zeile gibt an, in welchen Zeitabschnitten ein Entladeprozess erfolgt, also die Anode AN und die Kathode K über den Lastwiderstand R_{L} kurzgeschlossen sind und ein Stromfluss im Rahmen eines Ladeprozesses Lad erfolgt. Zeitlich ist das Graustufensymbol in der zweitobersten Zeile komplementär zu dem Graustufensymbol in der obersten Zeile positioniert. Die dritte Zeile veranschaulicht einen Zeitraum Po[A+K-], in dem die Anode AN mit einer positiven elektrischen Spannung beaufschlagt ist und die Kathode K mit einer negativen Spannung beaufschlagt ist. Die vierte Zeile veranschaulicht einen Zeitraum Po[A-K+], in dem die Anode AN mit einer negativen elektrischen Spannung beaufschlagt ist und die Kathode K mit einer positiven elektrischen Spannung beaufschlagt ist. In der fünften Zeile sind Zeitpunkte und kurze Zeitintervalle markiert, in denen die Mischeinheit M in Betrieb ist. In der sechsten Zeile sind Zeitpunkte markiert, zu denen ein CO₂-Eintrag CO2 in den Behälter der Reinigungsvorrichtung erfolgt.

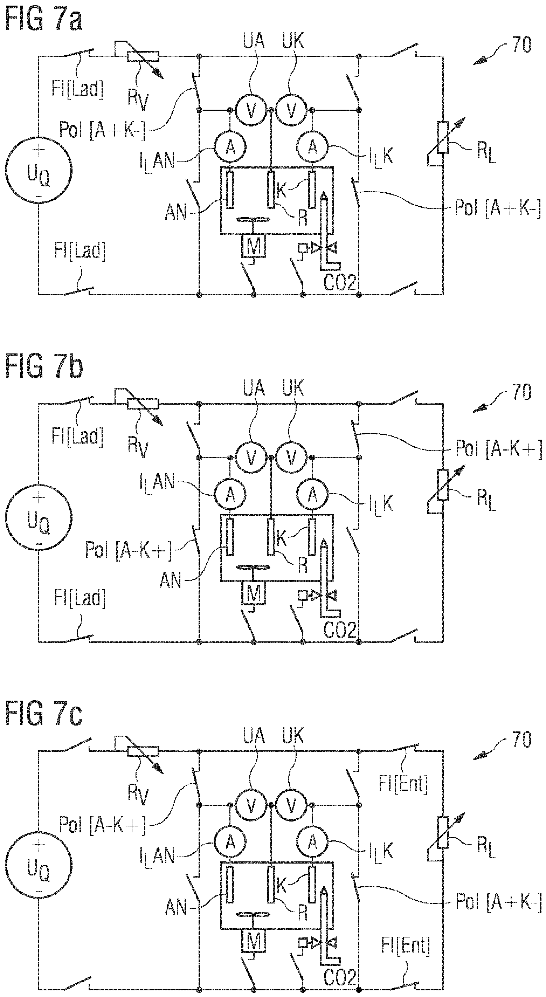

In Figur 7a bis 7c ist eine Darstellung 70 einer Ansteuerungs- und Auswertungseinrichtung zur Ansteuerung von Elektroden AN, R, K und Sensoren und zum Auswerten von Messwerten der in der Reinigungsvorrichtung 10 angeordneten Messeinheiten, insbesondere der Elektroden und Sensoren gezeigt. Die Ansteuerungs- und Auswertungseinrichtung weist einen Lastwiderstand R_{L}, mit dem die Anode AN und die Kathode K bei einem Entladeprozess kurzgeschlossen wird, auf. Über Spannungsmesseinheiten V kann eine Spannung U_{A}, U_{K} zwischen der Referenzelektrode R und der Anode AN bzw. der Kathode K gemessen werden.

Bei einem Ladeprozess sind die Anode AN und die Kathode K mit einer Spannungsquelle U_{Q} elektrisch verbunden. In diesem Modus fließt der Ladestrom I_{L} über einen Vorwiderstand R_{V} und eine Strommesseinheit A. Beim Entladeprozess kann der Strom invertiert gemessen werden. Eine Mischeinheit M ist an ein AC-Netz angeschlossen und ein Ventil einer CO₂-Eintrageinheit ist an eine DC-Quelle angeschlossen.

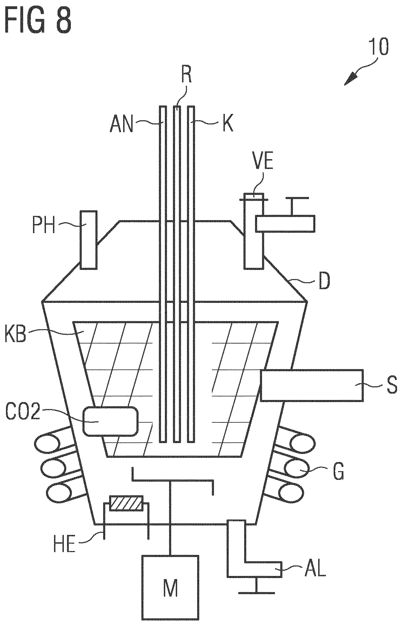

In Figur 8 ist eine Darstellung einer Reinigungsvorrichtung 10 gemäß einem Ausführungsbeispiel der Erfindung mit drei Elektroden AN, R, K, einer Leitfähigkeitsmessung S, einer PH-Wertmessung PH, CO₂-Eintrag CO₂ und Mischwerk M sowie einem Korb KB zur Aufbewahrung von zu reinigendem Plastikmüll gezeigt. Befüllen kann man die Vorrichtung über den Deckel D und über ein Ventil VE den geschlossenen Behälter mit Druck beaufschlagen oder evakuieren. Entleert werden kann der Behälter über seitliches Auskippen oder einen optionalen Auslass AL am Boden. Soll der Behälter zusätzlich die Aufgabe des Gefriertrocknens vereinen, kann noch eine Rohrschlange G für ein Kältemittel angebracht sowie im inneren ein Heizelement HE platziert werden, zum Einfrieren und Verdampfung der inneren Feuchtigkeit unter Vakuum. Auf Basis der PH-Werte und Leitfähigkeitswerte sowie der Spannungswerte können stoffbasierte Energieumsätze ermittelt werden, die mit den theoretischen Energiemengen für eine gewisse Stoffumsetzung verglichen werden können. Durch diesen Vergleich kann der Fortgang eines Stoffumsatzprozesses gemessen bzw. auf Messungen basiert quantitativ verfolgt werden. Mit CO₂ lässt sich der PH-Wert in gewissen Grenzen steuern.

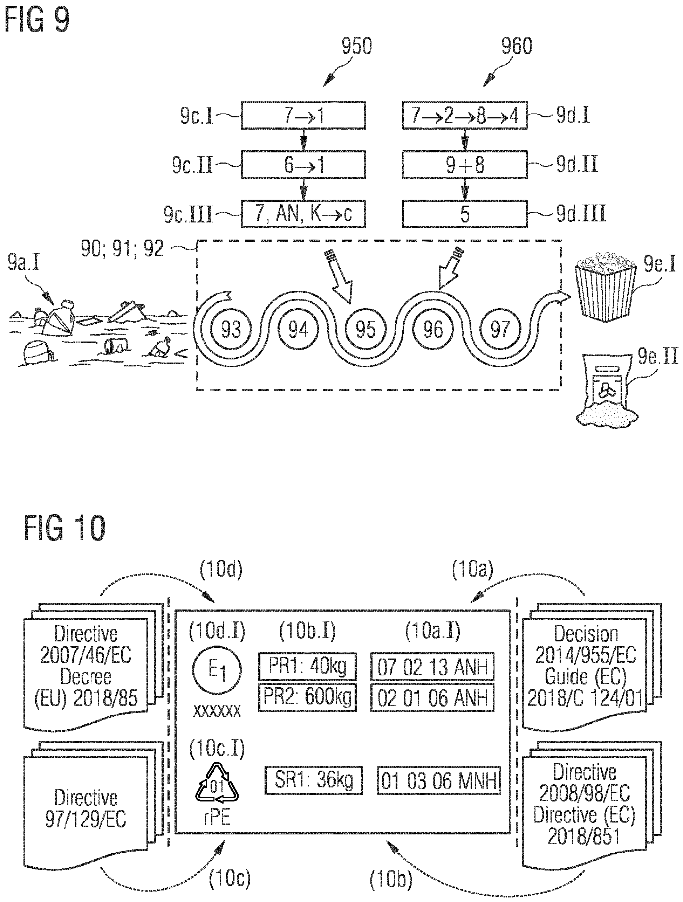

In Figur 9 ist ein Maschinenpark 90, 91, 92 in seinen Anlagenteilen dargestellt, welcher notwendig wird, um den Primärrohstoff 7 in gereinigten Sekundärrohstoff (Recyclat) bergmännisch umzuwandeln.

Der Maschinenpark kann zum Beispiel einen Maschinenpark 90 an Land, einen Maschinenpark 91 auf einem Strandfahrzeug oder einen Maschinenpark 92 an Bord eines Wasserfahrzeugs umfassen.

Weiterhin ist in Figur 9 eine Anlage 93 zum Aufnehmen von Müll symbolisiert sowie eine Anlage 94 zum Vorbereiten von Müll, insbesondere zum Sortieren, Trennen und Zerkleinern des Mülls.

Außerdem ist in Figur 9 eine Anlage 95 zum Waschen von Müll veranschaulicht.

Der Anlage 95 zum Waschen von Müll wird ein Flussdiagramm 950 zugeordnet, welches ein Verfahren zur Reinigung einer salzhaltigen Flüssigkeit und/oder eines salzbehafteten Gegenstands gemäß einem Ausführungsbeispiel der Erfindung veranschaulicht. Mit dem Schritt 9c.I erfolgt ein Sammeln von salzbehaftetem Plastikmüll 7 in einem Behälter 1 und eine Zugabe von Salzwasser. Bei dem Schritt 9c.II erfolgt eine Zugabe von Gülle 6 in den Behälter 1. Bei dem Schritt 9c.III erfolgt der eigentliche Reinigungsvorgang, wobei der salzbehaftete Plastikmüll 7 mit Hilfe der Gülle 6 von dem Salz c durch Kontaktieren der Gülle 6 mit insgesamt drei Elektroden, einer Anode AN, einer Kathode K und einer Referenzelektrode R befreit wird. Dabei wird zwischen der Anode AN und der Kathode K, dem Salz und der Gülle 6 ein galvanischer Prozess ausgelöst und das Salz c und die Gülle werden in Reaktionsprodukte umgesetzt. Der Anlage 96 zum Trocknen von Müll wird ein Flussdiagramm 960 zugeordnet, welches ein Verfahren zur Gefriertrocknung des gereinigten Kunststoffes veranschaulicht. Bei dem Schritt 9d.I erfolgt das Sammeln des gereinigten Plastikmülls 7 in einem Behälter 2, wobei anschließend mit geschlossenem Deckel unter Vakuum der Gasinhalt evakuiert 8 wird und eine Tiefkühlung 4 erfolgt. Mit Schritt 9d.II erfolgt als nächstes das Verdampfen durch Heizen 9 und das weitere Evakuieren 8 vom aufsteigendem Dampf. Mit Schritt 9d.II wird der Inhalt nach dem Evakuieren langsam belüftet, so dass sich wieder normal null Druck einstellt und der Deckel geöffnet werden kann. In Figur 9 ist auch ein Aufbewahrungsbehälter 97 für das getrocknete Recyclat und für Reststoffe gezeigt.

In Figur 10 beschäftigt sich die Erfindung mit den Qualitätsstandards und Richtlinien der Europäischen Union und dessen Verordnungen. Um einen nachhaltigen, kreislauffähigen und wirtschaftlichen Prozess der Gesellschaft zu veranschaulichen, soll es dieser Form des ökonomischen Recyclings eine Typenkennung und ein Ursprungszeugnis ermöglichen, sich von anderen Technologien zu unterscheiden. Die Zuordnung zur Richtlinie "(10a)" ermöglicht eine Kennzeichnung "(10a.I)" von Rohstoffen, die bergmännisch aus einer Lagerstätte 9a.I abgebaut wurden. Primär-Rohstoff PR1 wird dabei kategorisiert als 07 02 13 Typ Kunststoffabfälle, eingestuft in Absolute Non-Hazardous ANH (im Deutschen etwa "absolut ungefährlich"). Um einen Rohstoff aus einem Abbaugebiet heraus zu lösen, muss dieser gewaschen werden. In diesem Fall kommt der Primär-Rohstoff PR2 zum Einsatz, welcher dabei als 02 01 06 tierische Ausscheidungen, Gülle/Jauche und Stallmist, ebenfalls eingestuft als Absolute Non-Hazardous ANH (dies Stoffe sind nur ab einer Schwellenkonzentration als Gefahrstoffe zu behandeln) kategorisiert werden kann. Am Ende des Prozesses im Bergbau steht die Reingewinnung. Hier spricht man vom Sekundär-Rohstoff SR1, im Falle der Kunststoffverarbeitung als gewonnenes Post-Consumer Rezyklat PCR, kategorisiert zur Nummer 01 03 06, Aufbereitungsrückstände aus dem Bergbau mit Ausnahme derjenigen, die unter 01 03 04 und 01 03 05 fallen, eingestuft in Mirror non-hazardous MNH. Durch die erfolgte Klassifizierung "(10a.I)" und der Mengenangabe nach "(10b.I)" auf einem Typenschild kann ein Anwender das Kreislaufwirtschaftsgesetz "(10b)" in seinen Stufen einhalten, weil das Recyclat nach "(10c.I)" gekennzeichnet für bestimmte Zwecke verwendet wird, ein Markt oder eine Nachfrage danach besteht und alle für seine jeweilige Zweckbestimmung geltenden technischen Anforderungen sowie alle Rechtsvorschriften und anwendbaren Normen für Erzeugnisse zugeordnet werden können. Durch die Rückführung von Müll 9a.I in Recyclat 9e.I und 9e.II wird die Umwelt bereinigt und damit insgesamt eine schädliche Auswirkung auf Mensch oder Umwelt reduziert. Weil es für den grenzüberschreitenden Warenverkehr für Händler und Behörden aber einheitliche Typengenehmigungen geben muss, kann als Vorbild für eine Homologation der Beschluss "(10d)" und die Länderkennzeichnung "(10d.I)" vom Sitz der Genehmigungsbehörde herangezogen werden.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Insbesondere ist die Erfindung nicht auf die Reinigung von Plastikmüll und Gülle beschränkt, sondern kann auch auf andere Reststoffe angewendet werden.

Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" nicht aus, dass diese auch aus mehreren, gegebenenfalls auch räumlich getrennten, Untereinheiten bestehen.

### Bezugszeichenliste

1 Steuereinrichtung
1a Spannungsmesseinheit
1b Strommesseinheit
1c Leitwert-Messeinheit
2 Behälter zum Sammeln von Salzwasser
2a Deckel
3 Ansteuerungseinheit
4 Kühlen
5 Belüften
6 Gülle / wässriges Reinigungsmittel
7 Plastikmüll / Gegenstand / Primärrohstoff
8 Evakuieren
9 Heizen und Verdampfen
10 Reinigungsvorrichtung
20 Darstellung von elektrischen Spannungswerten
30 Pourbaix-Diagramm für Eisenanode
40 Pourbaix-Diagramm für Zink-Kathode
50 Darstellung von elektrischen Spannungswerten
60 Diagramm
70 Darstellung einer Ansteuerungs- und Auswertungseinrichtung
9a.I Müll / Lagerstätte
9e.I Recyclat
9e.ll lieferfertiges Recyclat
90 Maschinenpark zu Land
91 Maschinenpark auf einem Strandfahrzeug
92 Maschinenpark an Bord eines Wasserfahrzeugs
93 Anlage zum Aufnehmen von Müll (Fischen, Saugen, Baggern, Einsammeln)
94 Anlage zum Vorbereiten von Müll (Sortieren, Trennen, Zerkleinern)
95 Anlage zum Waschen von Müll
96 Anlage zum Trocknen von Müll
97 Aufbewahrungsbehälter von Recyclat und Reststoffen
950 Flussdiagramm Reinigungsprozess
960 Flussdiagramm Gefriertrocknen
A Strommesseinheit
AL Auslass
AN Anode
BR braun / Reaktion braun
c Salz
CO₂ CO₂-Eintrag
D Deckel
G Rohrschlange
GE gelb / Reaktion gelb
GR grün / Reaktion grün
HE Heizelement
I_{L} Ladestrom
K Kathode
KB Korb zur Aufbewahrung von zu reinigendem Plastikmüll
M Mischwerk / Rühreinrichtung
PH PH-Wertmessung / PH-Sensor
PR Produkt / Reaktionsprodukt
R Referenzelektrode
R_{L} Lastwiderstand
RP Reaktionsprodukte
R_{V} Vorwiderstand
S Leitfähigkeitsmessung
SW Salzwasser
U Spannungswert / elektrische Spannung
U_{A} Spannung der Anode
U_{K} Spannung der Kathode
U_{Q} Spannungsquelle
V Spannungsmessung
VE Ventil

## Patentansprüche

1. Verfahren zur Reinigung einer salzhaltigen Flüssigkeit und/oder eines salzbehafteten Gegenstands (c), aufweisend die Schritte:
- Sammeln mindestens eines salzbehafteten Gegenstands (7), insbesondere Plastikmüll, und/oder einer salzhaltigen Flüssigkeit in einem Behälter (2),
- Zugeben eines wässrigen Reinigungsmittels (6) in den Behälter (2),
- Reinigen des mindestens einen salzbehafteten Gegenstands (7) und/oder der salzhaltigen Flüssigkeit mit dem wässrigen Reinigungsmittel von dem Salz (c) durch Kontaktieren des wässrigen Reinigungsmittels mit mindestens zwei Elektroden (AN, K) mit zueinander unterschiedlichen elektrischen Potentialen, wobei durch einen Kontakt des wässrigen Reinigungsmittels (6) mit dem Salz (c) des salzbehafteten Gegenstands (7) und/oder der salzhaltigen Flüssigkeit und den mindestens zwei Elektroden (AN, K) ein galvanischer Prozess zwischen dem Salz (c) und dem wässrigen Reinigungsmittel (6) ausgelöst wird und das Salz (c) und das wässrige Reinigungsmittel (6) in Reaktionsprodukte (PR) umgesetzt werden.

2. Verfahren nach Anspruch 1, wobei der Reinigungsschritt mindestens einen die folgenden Teilschritte umfasst:
- Entnehmen des mindestens einen gereinigten Gegenstands (7) aus dem Behälter (2),
- Entfernen der bei dem galvanischen Prozess entstandenen gasförmigen und festen Reaktionsprodukte aus dem Behälter (2),
- Entfernen und Filtern des zumindest teilweise umgesetzten wässrigen Reinigungsmittels (6) aus dem Behälter (2).

3. Verfahren nach Anspruch 2, wobei der Reinigungsschritt den Schritt des Gefriertrocknens des gereinigten Gegenstands (7) umfasst.

4. Verfahren nach einem der vorstehenden Ansprüche, wobei das wässrige Reinigungsmittel (6) eine der folgenden Komponenten umfasst:
- Salzwasser,
- eine ammoniakhaltige organische Flüssigkeit oder ein eine ammoniakhaltige organische Flüssigkeit aufweisendes Gemisch.

5. Verfahren nach einem der vorstehenden Ansprüche, wobei das Sammeln des mindestens einen salzbehafteten Gegenstands und/oder der salzhaltigen Flüssigkeit umfasst:
- Sammeln des mindestens einen salzbehafteten Gegenstands (7) und/oder der salzhaltigen Flüssigkeit in einem für das wässrige Reinigungsmittel (6) durchlässigen Korb (KB),
- Einsetzen des Korbs (KB) in den Behälter (2) derart, dass der mindestens eine salzbehaftete Gegenstand (7) in das wässrige Reinigungsmittel (6) eingetaucht werden.

6. Verfahren nach einem der vorstehenden Ansprüche, wobei die mindestens zwei Elektroden eine erste Elektrode (AN) und eine zweite Elektrode (K) umfassen und die erste Elektrode (AN) vorzugsweise Eisen als Elektrodenmaterial und die zweite Elektrode (K) vorzugsweise Zink als Elektrodenmaterial umfasst und in Abhängigkeit von den Werten und Vorzeichen der Potenziale der ersten Elektrode (AN) und der zweiten Elektrode (K) ein Energiefluss auftritt, welcher einen Ladevorgang oder Entladevorgang umfasst, und jeweils ein bestimmter Typ einer chemischen Reaktion mit dem jeweiligen Elektrodenmaterial der ersten Elektrode (AN) und der zweiten Elektrode (K) abläuft.

7. Verfahren nach einem der vorstehenden Ansprüche, wobei der mindestens eine salzbehaftete Gegenstand (7) oder die salzhaltige Flüssigkeit an oder in einem salzhaltigen Gewässer, vorzugsweise einem Meer, gesammelt wird und der Reinigungsvorgang vor Ort erfolgt.

8. Verfahren nach einem der vorstehenden Ansprüche, wobei das wässrige Reinigungsmittel (6) mit Wasser gemischte Exkremente, vorzugsweise Gülle, aufweist.

9. Verfahren nach einem der vorstehenden Ansprüche, wobei die mindestens zwei Elektroden eine dritte Elektrode (R) umfassen, welche als Elektrodenmaterial vorzugsweise Chrom umfasst, und mit der dritten Elektrode (R) ein Referenz-Potenzial, vorzugsweise ein Null-Potenzial, zur Messung des Potenzials der ersten Elektrode (AN) und des Potenzials der zweiten Elektrode (K) bereitgestellt wird.

10. Verfahren nach einem der vorstehenden Ansprüche, wobei ein elektrischer Strom auf Basis eines gemessenen Leitwerts, einer Elektrodenfläche und eines Elektrodenabstands ermittelt wird und eine elektrische Spannung auf Basis der Differenz des Potenzials der ersten Elektrode (AN) und der zweiten Elektrode (K), des gemessenen PH-Werts und der Nernst-Gleichung ermittelt wird und ein Vergleich der auf Basis des berechneten elektrischen Stroms und der berechneten elektrischen Spannung berechneten Energie mit einer auf Basis einer direkten Strommessung und einer direkten Spannungsmessung gemessenen Energie durchgeführt wird und auf Basis des Vergleichs ein Umsatz von umgesetzten Stoffmengen ermittelt wird.

11. Reinigungsvorrichtung (10), aufweisend:
- einen Behälter (2) zum Sammeln einer salzhaltigen Flüssigkeit und/oder mindestens eines salzbehafteten Gegenstands (7), insbesondere Plastikmüll zur Aufnahme eines wässrigen Reinigungsmittels (6),
- das wässrige Reinigungsmittel (6),
- mindestens zwei Elektroden (AN, K) mit zueinander unterschiedlichen elektrischen Potentialen zum Reinigen der salzhaltigen Flüssigkeit und/oder des mindestens einen salzbehafteten Gegenstands (7) mit dem wässrigen Reinigungsmittel von dem Salz (c) des salzbehafteten Gegenstands (7) und/oder der salzhaltigen Flüssigkeit durch Kontaktieren des wässrigen Reinigungsmittels mit den mindestens zwei Elektroden, derart, dass durch den Kontakt des wässrigen Reinigungsmittels (6) mit dem Salz (c) und den mindestens zwei Elektroden ein galvanischer Prozess zwischen dem Salz (c) und dem wässrigen Reinigungsmittel (6) ausgelöst wird und das Salz (c) und das wässrige Reinigungsmittel (6) in Reaktionsprodukte (PR) umgesetzt werden.

12. Reinigungsvorrichtung nach Anspruch 11, wobei der Behälter (2) einen für das wässrige Reinigungsmittel (6) durchlässigen Korb (KB) zur Aufnahme des mindestens einen salzbehafteten Gegenstands (7) umfasst, welcher derart positionierbar ist, dass der mindestens eine salzbehaftete Gegenstand (7) in das wässrige Reinigungsmittel (6) getaucht wird bzw. werden.

13. Reinigungsvorrichtung nach Anspruch 11 oder 12, wobei die mindestens zwei Elektroden eine erste Elektrode (AN) und eine zweite Elektrode (K) umfassen und die erste Elektrode (AN) vorzugsweise Eisen als Elektrodenmaterial und die zweite Elektrode (K) vorzugsweise Zink als Elektrodenmaterial umfasst und derart ansteuerbar sind, dass in Abhängigkeit von den Werten und Vorzeichen der Potenziale der ersten Elektrode (AN) und der zweiten Elektrode (K) ein Energiefluss auftritt, welcher einen Ladevorgang oder Entladevorgang umfasst, und jeweils ein bestimmter Typ einer chemischen Reaktion mit dem jeweiligen Elektrodenmaterial der ersten Elektrode (AN) und der zweiten Elektrode (K) abläuft.

14. Reinigungsvorrichtung nach einem der Ansprüche 11 bis 13, vorzugsweise eine galvanische Zelle, wobei die mindestens zwei Elektroden eine dritte Elektrode (R) umfassen, welche als Elektrodenmaterial vorzugsweise Chrom umfasst und dazu eingerichtet ist, ein Referenz-Potenzial, vorzugsweise ein Null-Potenzial, zur Messung des Potenzials der ersten Elektrode (AN) und des Potenzials der zweiten Elektrode (K) bereitzustellen.

15. System, aufweisend:
- eine Anlage (95) zum Waschen, aufweisend eine Reinigungsvorrichtung (10) nach einem der Ansprüche 11 bis 14 und
- eine Anlage zum Trocknen (96) gemäß dem Funktionsprinzip des Gefriertrocknens,
welche platziert sind auf einem Maschinenpark (90;91;92) für den Einsatz im Recycling von Plastikmüll (7).

## Geänderte Patentansprüche

### Geänderte Patentansprüche gemäss Regel 137(2) EPÜ.

1. Verfahren zur Produktion von Düngemittel auf der Basis einer salzhaltigen Flüssigkeit und/oder eines salzbehafteten Gegenstands (c), aufweisend die Schritte:
- Sammeln mindestens eines salzbehafteten Gegenstands (7), insbesondere Plastikmüll, und/oder einer salzhaltigen Flüssigkeit in einem Behälter (2),
- Zugeben eines wässrigen Reinigungsmittels (6), welches eine ammoniakhaltige organische Flüssigkeit oder ein eine ammoniakhaltige organische Flüssigkeit aufweisendes Gemisch aufweist, in den Behälter (2),
- Reinigen des mindestens einen salzbehafteten Gegenstands (7) und/oder der salzhaltigen Flüssigkeit mit dem wässrigen Reinigungsmittel von dem Salz (c) durch Kontaktieren des wässrigen Reinigungsmittels mit mindestens zwei Elektroden (AN, K) mit zueinander unterschiedlichen elektrischen Potentialen, wobei durch einen Kontakt des wässrigen Reinigungsmittels (6) mit dem Salz (c) des salzbehafteten Gegenstands (7) und/oder der salzhaltigen Flüssigkeit und den mindestens zwei Elektroden (AN, K) ein galvanischer Prozess zwischen dem Salz (c) und dem wässrigen Reinigungsmittel (6) ausgelöst wird und das Salz (c) und das wässrige Reinigungsmittel (6) in Reaktionsprodukte (PR) umgesetzt werden, wobei als Produkt des Reinigungsvorgangs Düngemittel erzeugt wird.

2. Verfahren nach Anspruch 1, wobei der Reinigungsschritt mindestens einen die folgenden Teilschritte umfasst:
- für den Fall, dass mindestens ein salzbehafteter Gegenstand (7) gesammelt wird, Entnehmen des mindestens einen gereinigten Gegenstands (7) aus dem Behälter (2),
- Entfernen der bei dem galvanischen Prozess entstandenen gasförmigen und festen Reaktionsprodukte aus dem Behälter (2),
- Entfernen und Filtern des zumindest teilweise umgesetzten wässrigen Reinigungsmittels (6) aus dem Behälter (2).

3. Verfahren nach Anspruch 2, wobei der Reinigungsschritt den Schritt des Gefriertrocknens des gereinigten Gegenstands (7) umfasst.

4. Verfahren nach einem der vorstehenden Ansprüche, wobei das wässrige Reinigungsmittel (6) Salzwasser umfasst.

5. Verfahren nach einem der vorstehenden Ansprüche, wobei das Sammeln des mindestens einen salzbehafteten Gegenstands und/oder der salzhaltigen Flüssigkeit umfasst:
- Sammeln des mindestens einen salzbehafteten Gegenstands (7) und/oder der salzhaltigen Flüssigkeit in einem für das wässrige Reinigungsmittel (6) durchlässigen Korb (KB),
- Einsetzen des Korbs (KB) in den Behälter (2) derart, dass der mindestens eine salzbehaftete Gegenstand (7) in das wässrige Reinigungsmittel (6) eingetaucht werden.

6. Verfahren nach einem der vorstehenden Ansprüche, wobei die mindestens zwei Elektroden eine erste Elektrode (AN) und eine zweite Elektrode (K) umfassen und die erste Elektrode (AN) vorzugsweise Eisen als Elektrodenmaterial und die zweite Elektrode (K) vorzugsweise Zink als Elektrodenmaterial umfasst und in Abhängigkeit von den Werten und Vorzeichen der Potenziale der ersten Elektrode (AN) und der zweiten Elektrode (K) ein Energiefluss auftritt, welcher einen Ladevorgang oder Entladevorgang umfasst, und jeweils ein bestimmter Typ einer chemischen Reaktion mit dem jeweiligen Elektrodenmaterial der ersten Elektrode (AN) und der zweiten Elektrode (K) abläuft.

7. Verfahren nach einem der vorstehenden Ansprüche, wobei der mindestens eine salzbehaftete Gegenstand (7) oder die salzhaltige Flüssigkeit an oder in einem salzhaltigen Gewässer, vorzugsweise einem Meer, gesammelt wird und der Reinigungsvorgang vor Ort erfolgt.

8. Verfahren nach einem der vorstehenden Ansprüche, wobei das wässrige Reinigungsmittel (6) mit Wasser gemischte Exkremente, vorzugsweise Gülle, aufweist.

9. Verfahren nach einem der vorstehenden Ansprüche, wobei die mindestens zwei Elektroden eine dritte Elektrode (R) umfassen, welche als Elektrodenmaterial vorzugsweise Chrom umfasst, und mit der dritten Elektrode (R) ein Referenz-Potenzial, vorzugsweise ein Null-Potenzial, zur Messung des Potenzials der ersten Elektrode (AN) und des Potenzials der zweiten Elektrode (K) bereitgestellt wird.

10. Verfahren nach einem der vorstehenden Ansprüche, wobei ein elektrischer Strom auf Basis eines gemessenen Leitwerts, einer Elektrodenfläche und eines Elektrodenabstands ermittelt wird und eine elektrische Spannung auf Basis der Differenz des Potenzials der ersten Elektrode (AN) und der zweiten Elektrode (K), des gemessenen PH-Werts und der Nernst-Gleichung ermittelt wird und ein Vergleich der auf Basis des berechneten elektrischen Stroms und der berechneten elektrischen Spannung berechneten Energie mit einer auf Basis einer direkten Strommessung und einer direkten Spannungsmessung gemessenen Energie durchgeführt wird und auf Basis des Vergleichs ein Umsatz von umgesetzten Stoffmengen ermittelt wird.

11. Vorrichtung (10), aufweisend:
- einen Behälter (2) zum Sammeln einer salzhaltigen Flüssigkeit und/oder mindestens eines salzbehafteten Gegenstands (7), insbesondere Plastikmüll zur Aufnahme eines wässrigen Reinigungsmittels (6),
- das wässrige Reinigungsmittel (6), welches eine ammoniakhaltige organische Flüssigkeit oder ein eine ammoniakhaltige organische Flüssigkeit aufweisendes Gemisch aufweist,
- mindestens zwei Elektroden (AN, K) mit zueinander unterschiedlichen elektrischen Potentialen zum Reinigen der salzhaltigen Flüssigkeit und/oder des mindestens einen salzbehafteten Gegenstands (7) mit dem wässrigen Reinigungsmittel von dem Salz (c) des salzbehafteten Gegenstands (7) und/oder der salzhaltigen Flüssigkeit durch Kontaktieren des wässrigen Reinigungsmittels mit den mindestens zwei Elektroden, derart, dass durch den Kontakt des wässrigen Reinigungsmittels (6) mit dem Salz (c) und den mindestens zwei Elektroden ein galvanischer Prozess zwischen dem Salz (c) und dem wässrigen Reinigungsmittel (6) ausgelöst wird und das Salz (c) und das wässrige Reinigungsmittel (6) in Reaktionsprodukte (PR) umgesetzt werden, wobei als Produkt des Reinigungsvorgangs Düngemittel erzeugt wird.

12. Vorrichtung nach Anspruch 11, wobei der Behälter (2) einen für das wässrige Reinigungsmittel (6) durchlässigen Korb (KB) zur Aufnahme des mindestens einen salzbehafteten Gegenstands (7) umfasst, welcher derart positionierbar ist, dass der mindestens eine salzbehaftete Gegenstand (7) in das wässrige Reinigungsmittel (6) getaucht wird bzw. werden.

13. Vorrichtung nach Anspruch 11 oder 12, wobei die mindestens zwei Elektroden eine erste Elektrode (AN) und eine zweite Elektrode (K) umfassen und die erste Elektrode (AN) vorzugsweise Eisen als Elektrodenmaterial und die zweite Elektrode (K) vorzugsweise Zink als Elektrodenmaterial umfasst und derart ansteuerbar sind, dass in Abhängigkeit von den Werten und Vorzeichen der Potenziale der ersten Elektrode (AN) und der zweiten Elektrode (K) ein Energiefluss auftritt, welcher einen Ladevorgang oder Entladevorgang umfasst, und jeweils ein bestimmter Typ einer chemischen Reaktion mit dem jeweiligen Elektrodenmaterial der ersten Elektrode (AN) und der zweiten Elektrode (K) abläuft.

14. Vorrichtung nach einem der Ansprüche 11 bis 13, vorzugsweise eine galvanische Zelle, wobei die mindestens zwei Elektroden eine dritte Elektrode (R) umfassen, welche als Elektrodenmaterial vorzugsweise Chrom umfasst und dazu eingerichtet ist, ein Referenz-Potenzial, vorzugsweise ein Null-Potenzial, zur Messung des Potenzials der ersten Elektrode (AN) und des Potenzials der zweiten Elektrode (K) bereitzustellen.

15. Maschinenpark (90;91;92) für den Einsatz im Recycling von Plastikmüll (7), welcher aufweist:
- ein System, aufweisend:
- eine Anlage (95) zum Waschen, aufweisend eine Vorrichtung (10) nach einem der Ansprüche 11 bis 14 und
- eine Anlage zum Trocknen (96) gemäß dem Funktionsprinzip des Gefriertrocknens.
